# EUROPEAN PATENT SPECIFICATION

(11) **EP 3 370 100 B1**
(45) Date of publication and mention of the grant of the patent: **28.08.2024**
(21) Application number: 17159051.6
(22) Date of filing: 03.03.2017
(51) Int. Cl.: G02B 27/00, G02B 27/42, G02B 27/01

(54) **VIRTUAL AND AUGMENTED REALITY APPARATUS, NEAR-EYE DISPLAYS COMPRISING THE SAME, AND METHOD OF DISPLAYING VIRTUAL AND AUGMENTED REALITY**
VORRICHTUNG FÜR VIRTUELLE UND ERWEITERTE REALITÄT, AUGENNAHE ANZEIGE DAMIT UND VERFAHREN ZUR ANZEIGE FÜR VIRTUELLE UND ERWEITERTE REALITÄT
APPAREIL DE RÉALITÉ VIRTUELLE ET AUGMENTÉE, AFFICHAGES PROCHES DE L' IL LE COMPRENANT ET PROCÉDÉ D'AFFICHAGE DE RÉALITÉ VIRTUELLE ET AUGMENTÉE

(43) Date of publication of application: 05.09.2018
(73) Proprietor: Nokia Technologies Oy, 02610 Espoo (FI)
(72) Inventor: KIMMEL, Jyrki Sakari, 33180 Tampere (FI); SALMIMAA, Marja, 33610 Tampere (FI); JÄRVENPÄÄ, Toni, 37800 Akaa (FI)
(74) Representative: Swindell & Pearson Limited

(56) References cited:
- EP-A2- 1 808 722
- WO-A1-2017/003795
- JP-A- H09 331 552
- US-A1- 2002 196 200
- US-A1- 2007 273 798
- US-A1- 2014 293 434
- US-A1- 2016 260 258

## Description

### TECHNOLOGICAL FIELD

Embodiments of the present invention relate to a virtual and augmented reality apparatus, near-eye displays comprising the same, and to a method of displaying virtual and augmented reality. In particular, they relate to an apparatus for simultaneously displaying virtual and augmented reality, monocular and binocular near-eye displays comprising such a virtual and augmented reality apparatus, and to methods of operating such an apparatus.

### BACKGROUND

Virtual reality apparatuses for displaying virtual reality content are now well known. A viewer of the virtual reality content may navigate round the virtual reality content by orienting their head in different directions and/or by moving linearly (e.g. left, right, forwards, backwards, up or down). This can be detected by accelerometers, gyroscopes and the like of the apparatus, and/or by external tracking systems, in order to render the virtual reality content according to the direction in which the viewer is looking and/or moving. However, a commonly occurring problem with such virtual reality apparatuses is the lack of a suitable user interface (UI). A user interface may be provided by physical controls, such as buttons and/or switches on the apparatus, in order to provide user controls like rewind, fast-forward, pause and play. This is less desirable, however, as the controls are not integrated with the user's virtual reality experience. Alternatively, the UI may be integrated with or embedded in the virtual reality content itself. This is inconvenient for the user, however, as the UI distracts the user from the virtual reality content. Moreover, if UI elements or icons are placed at fixed locations within the virtual reality content, the user must then search for the UI elements in the virtual reality content by turning their head until they face them, which again distracts the viewer and makes navigating the virtual reality content more difficult. Finally, merging the UI with the virtual reality content is not straightforward in terms of processing. Prior art can be found in WO 2017/003795 A1, US 2014/293434 A1, or JP H09 331552 A.

### BRIEF SUMMARY

According to the invention there is provided an apparatus comprising a display screen, a projective optical element in front of the display screen, configured to project a first image displayed on the display screen into an eye of a viewer, wherein the first image is a virtual reality image, and a transparent optical element positioned in an optical pathway from the display screen to the eye of the viewer and configured to superpose a second image on top of the first image, wherein the second image is an augmented reality image comprising a user interface for controlling the content of the first image.

With such an apparatus, the first image is a virtual reality image and the second image is an augmented reality image, overlaid on the virtual reality image. This permits a viewer to explore virtual reality content by turning their head and/or moving in different directions, which can be detected by accelerometers, gyroscopes, external tracking systems and the like, allowing the virtual reality content to be rendered according to the user's point of view, in a conventional manner. On the other hand, the augmented reality image can remain apparently static relative to the user's point of view, that is to say, fixed relative to a co-ordinate system which is defined by the head of the viewer, at any desired location in front of the viewer. This is in contrast to the virtual reality image, which can instead remain fixed relative to a co-ordinate system that is independent of the head of the viewer, such as one defined by the external world. Thus, for example, if the viewer moves linearly forwards or backwards, the virtual reality image can be re-scaled accordingly, whereas the augmented reality image can appear to remain the same size. The augmented reality image may therefore be used to provide a user interface, for example, which is easily accessible to the viewer, and which does not require the user to navigate within the virtual reality content in order to find it. The augmented reality image may, however, alternatively or additionally be used to provide other functions, as will be described in greater detail below.

Preferably, the projective optical element is configured to bring the first image into focus in a first focal plane and the transparent optical element is configured to bring the second image into focus in a second focal plane which is different from the first focal plane. Thus, the second, augmented reality image may be brought into focus in a different focal plane from the first, virtual reality image. This allows the viewer to focus their attention on the virtual reality image, when they wish to absorb the virtual reality content, and to switch their focus to the augmented reality image, when they wish to interact with a user interface, for example. On the other hand, since the first and second images are in different focal planes, the viewer is less distracted by whichever of the two images they are not focused on, because of the ability of the human visual cortex to filter out and effectively ignore an out-of-focus image, in favour of an in-focus image.

Preferably, the transparent optical element comprises an out-coupling optical element of an exit pupil expander and the projective optical element is interposed between the display screen and the exit pupil expander. This has the advantage that the exit pupil expander can comprise one or more diffractive optical elements, including the out-coupling optical element, which are very thin, and which can therefore be easily integrated into a virtual reality display device without adding to the overall depth of the device between the display screen and the viewer's eyes, and without adding significantly to the weight thereof, either.

If so, a surface of the out-coupling optical element facing away from the projective optical element may be convexly curved. This has the advantage of allowing the focal plane of the augmented reality image to be varied according to the degree of curvature of the out-coupling optical element.

In a possible preferred embodiment, the out-coupling optical element may be oriented at an oblique angle, θ, to the optical axis of the projective optical element. This has the advantage of allowing the augmented reality image to be placed at a location within the user's field of view, other than centrally therein, for example, along the bottom thereof. Alternatively or additionally, the location of the augmented reality image may be at least partially determined by the optical design of the out-coupling optical element.

In an alternative possible preferred embodiment, the transparent optical element may instead comprise a beam splitter and an offset optical element, the optical axis of which is aligned with the beam splitter perpendicular to the optical axis of the projective optical element. The offset optical element allows the augmented reality image to be injected into the beam splitter from the perpendicular direction, and for the augmented reality image to be injected into the beam splitter from a different direction than the virtual reality image and combined with the virtual reality image in the beam splitter.

If so, the beam splitter may be interposed between the display screen and the projective optical element. Alternatively, the projective optical element may be interposed between the display screen and the beam splitter. In other words, the beam splitter may be located either in front of or behind the projective optical element, relative to the display screen.

According to various, but not necessarily all, embodiments of the invention there is also provided a near-eye display comprising an apparatus as described above, wherein the apparatus comprises a binocular pair of the projective optical elements and a binocular pair of the transparent optical elements, each one of which is positioned in an optical pathway from the display screen to one of the eyes of the viewer. The near-eye display also comprises an optical projection engine configured to project the second image into the pair of transparent optical elements.

This is advantageous because it allows the augmented reality image to be provided by a single optical projection engine to both eyes of the viewer. Thus the augmented reality image can be provided as a two-dimensional image, in contrast to the full, stereoscopic three-dimension rendition of the virtual reality image. The optical projection engine may comprise a microdisplay and a collimator, for example. The collimator and the binocular pair of transparent optical elements can be designed such that the convergence angles of the pair of transparent optical elements mirror each other and the focal planes of the augmented reality images provided by each of the pair of transparent optical elements are substantially the same as each other. In other words, each one of the pair of transparent optical elements may be angled to a respective one of the eyes of the viewer such that the augmented reality images provided by each of the pair of transparent optical elements appear to the viewer to come from the same direction as each other and also to lie at the same distance from each eye, such that they combine to make a single, two-dimensional image.

According to various, but not necessarily all, embodiments of the invention there is also provided a method comprising displaying a first image on a display screen, projecting the first image through a transparent optical element into an eye of a viewer, and superposing a second image emitted from the transparent optical element on top of the first image.

Preferably, the method comprises tracking a gaze of the viewer, and altering a visual relationship between the first image and the second image according to the gaze of the viewer. This has the advantage that it allows the visual relationship between the first image and the second image to be altered based on feedback from the viewer, which is detected by tracking the gaze of the viewer. The visual relationship between the first and second images may be anything such as their relative brightness, focal distance, and so on.

If so, altering the visual relationship between the first image and the second image preferably comprises dimming or brightening one of the first and second images relative to the other of the first and second images. Thus, for example, if a viewer switches their focus from the first to the second image or back again, whichever image the viewer is not focused on could be rendered relatively less bright than the other image on which the viewer is focused.

Preferably, the method comprises reproducing at least a part of the first image in the second image at a higher resolution than the first image. This has the advantage that whereas the first, virtual reality image may have a resolution of, for example, only about 10 to 15 pixels per degree, the second, augmented reality image may be used to provide an area of the virtual reality image, such as in the centre thereof, with an enhanced resolution of, for example, about 40 pixels per degree or more. This can be used to give the viewer a more realistic and immersive user experience.

Preferably, the method comprises varying the transparency of the second image. This has the advantage that the second, augmented reality image can be used to mask or blank out a part of the first, virtual reality image, for example.

### BRIEF DESCRIPTION

For a better understanding of various examples that are useful for understanding the detailed description, reference will now be made by way of example only to the accompanying drawings in which:
Fig. 1A is a schematic plan view from above, not to scale, of a first embodiment of an apparatus;
Fig. 1B is a schematic side view, not to scale, of the apparatus shown in Fig. 1A;
Fig. 2 is an exploded front view, not to scale, of the apparatus shown in Figs. 1A and 1B;
Fig. 3 is a view of a stereoscopic image presented to a viewer using the apparatus shown in Figs. 1A, 1B and 2;
Fig. 4 is a schematic side view, not to scale, of a second embodiment of an apparatus;
Fig. 5A is a schematic plan view from above, not to scale, of a third embodiment of an apparatus;
Fig. 5B is a schematic side view, not to scale, of the apparatus shown in Fig. 5A;
Fig. 6 is a schematic side view, not to scale, of a fourth embodiment of an apparatus;
Fig. 7A is a schematic plan view from above, not to scale, of a fifth embodiment of an apparatus;
Fig. 7B is a schematic side view, not to scale, of the apparatus shown in Fig. 7A;
Fig. 8 is a schematic front view, not to scale, of a near-eye display; and
Fig. 9 schematically represents a method of operating a display apparatus.

### DETAILED DESCRIPTION

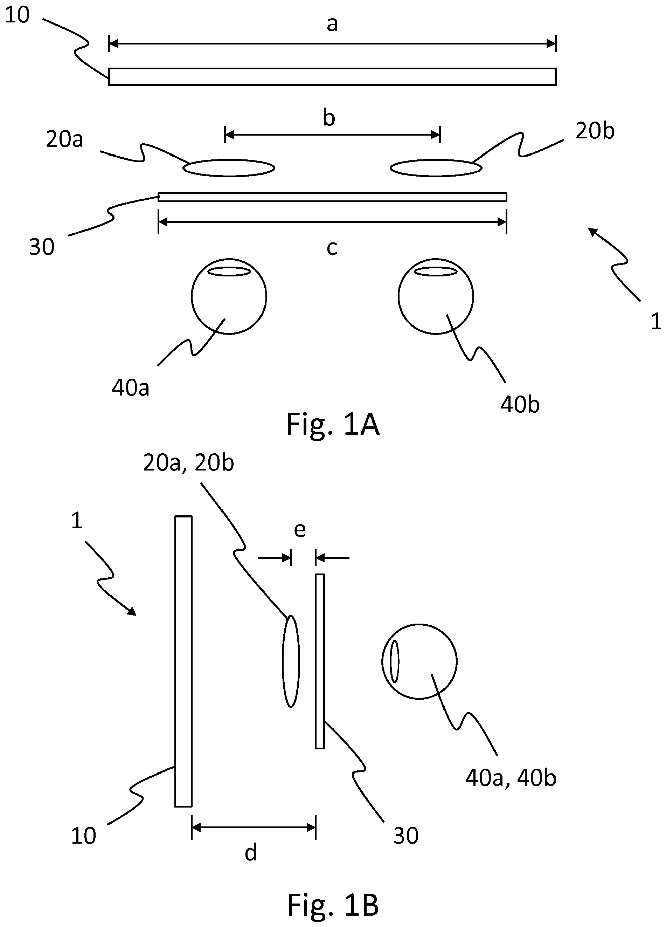

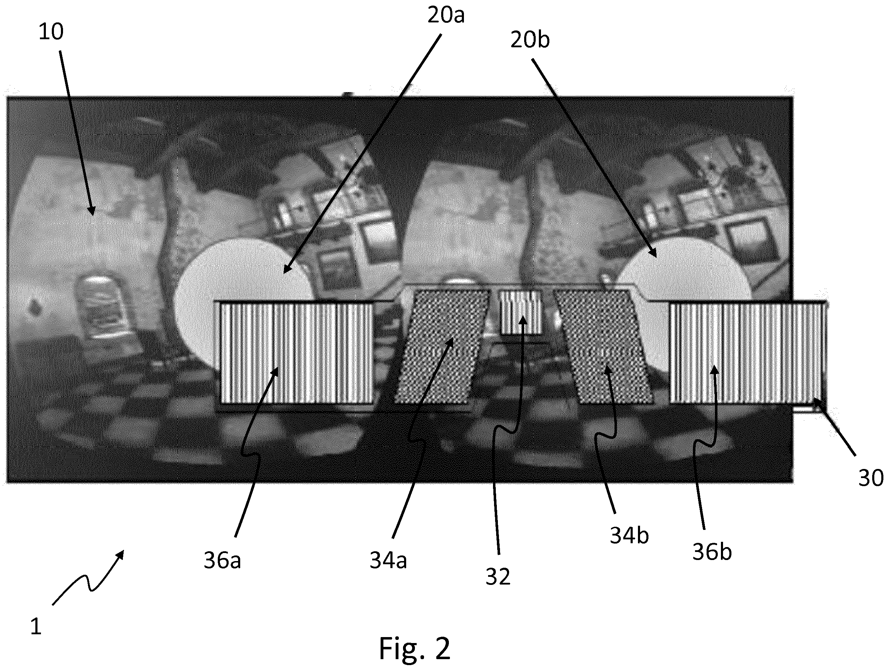

Figs. 1A, 1B and 2 schematically show a first apparatus 1. The apparatus 1 comprises a display screen 10, a binocular pair of projective optical elements 20a, 20b and an augmented reality device 30. The projective optical elements 20a, 20b are in front of the display screen 10 and are configured to project a first image displayed on the display screen 10 into the eyes 40a, 40b of a viewer. The first image may be a still or moving image. In use, therefore, the display screen 10 and the projective optical elements 20a, 20b function together as a virtual reality device.

As may be seen in Fig. 2, the augmented reality device 30 comprises a pair of transparent optical elements 36a, 36b, each of which is positioned in an optical pathway from the display screen 10 to a respective one of the eyes 40a, 40b of the viewer. Whereas in the exploded view of Fig. 2, the transparent optical elements 36a, 36b are shown offset from the projective optical elements 20a, 20b for purposes of clarity of illustration, in practice, the transparent optical elements 36a, 36b are each aligned with a respective one of the projective optical elements 20a, 20b and the eyes 40a, 40b of the viewer. The transparent optical elements 36a, 36b of the augmented reality device 30 are configured to superpose a second image on top of the first image. The second image may also be a still or moving image.

The width, a, of the display screen 10 may typically be about 115 mm. A separation, b, between the left and right projective optical elements 20a, 20b may typically be about 62 mm. The width, c, of the augmented reality device 30 may typically be about 90 mm. A separation, d, between the display screen 10 and the projective optical elements 20a, 20b may typically be about 20 mm. A separation, e, between the projective optical elements 20a, 20b and the augmented reality device 30 may typically be less than about 5 mm.

In the illustrated embodiment, the augmented reality device 30 is an exit pupil expander. The exit pupil expander 30 comprises an in-coupling optical element 32, a pair of intermediate optical elements 34a, 34b and a corresponding pair of out-coupling optical elements, which are the transparent optical elements 36a, 36b. In use, the second image is projected into the in-coupling optical element 32, transmitted from there by the intermediate optical elements 34a, 34b to a respective one of the out-coupling optical elements 34a, 34b, and emitted from the out-coupling optical elements 34a, 34b into the eyes 40a, 40b of the viewer.

As may be seen from all of Figs. 1A, 1B and 2, the projective optical elements 20a, 20b are interposed between the display screen 10 and the exit pupil expander 30. The projective optical elements 20a, 20b are configured to bring the first, virtual reality, image into focus in a first focal plane and the transparent optical elements 36a, 36b are configured to bring the second, augmented reality, image into focus in a second focal plane, which is different from the first focal plane. Preferably, the second focal plane is nearer to the eyes 40a, 40b of the viewer than the first focal plane, so that the second, augmented reality, image appears to the viewer to "float" above the first, virtual reality, image. This may be achieved by giving the transparent optical elements 36a, 36b a convex curvature on the surface thereof which faces the eyes 40a, 40b of the viewer; in other words, the surface of the out-coupling optical elements 36a, 36b facing away from the projective optical elements 20a, 20b. The focal distance of the exit pupil expander 30 can be reduced from infinity by increasing this convex curvature of the out-coupling optical elements 36a, 36b. In an alternative possible embodiment, two or more pairs of out-coupling optical elements of different curvatures may be used to provide augmented reality images in different focal planes from each other.

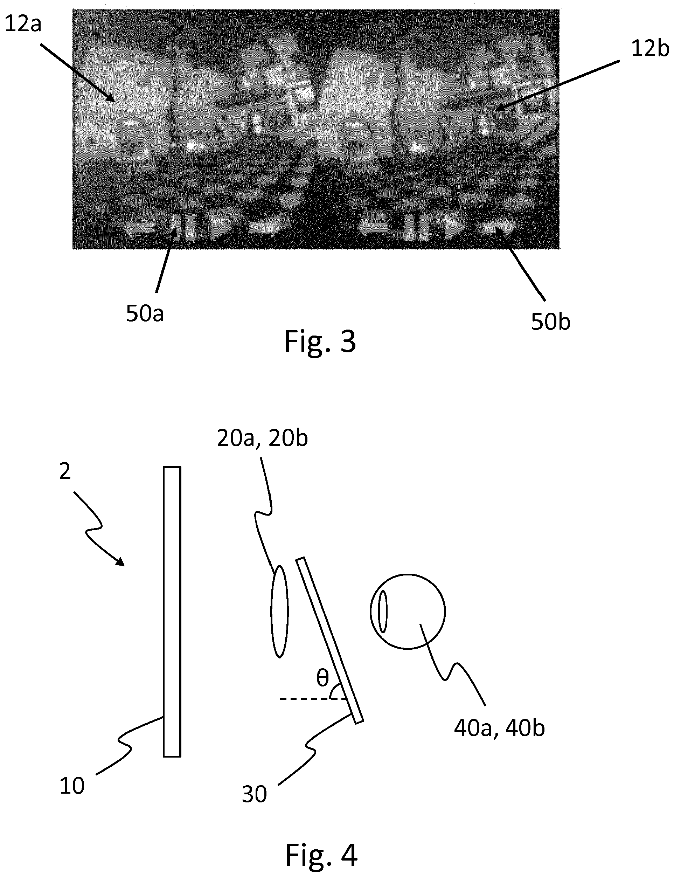

Fig. 3 gives an example of a stereoscopic image presented to the viewer when using the apparatus shown in Figs. 1A, 1B and 2. The stereoscopic image comprises a pair of virtual reality images 12a, 12b and a pair of augmented reality images 50a, 50b. The virtual reality images 12a, 12b displayed on display screen 10, after their projection by the pair of projective optical elements 20a, 20b, can be synthesized by the eyes 40a, 40b and brain of the viewer to form a single scene. The augmented reality images 50a, 50b emitted by the transparent optical elements 36a, 36b are also synthesized by the eyes and brain of the viewer to form another single image. Whereas the pair of virtual reality images 12a, 12b are different views of the same scene, which when synthesized by the viewer, will therefore appear to have perspective and depth, the pair of augmented reality images 50a, 50b are identical to each other, and will therefore appear flat and two-dimensional when synthesized by the viewer. This is because the pair of augmented reality images 50a, 50b are copies of a single image projected into the in-coupling optical element 32, whereas the pair of virtual reality images 12a, 12b displayed on display screen 10 have been processed to provide slightly different viewpoints from each other. For simplicity of processing, the augmented reality images 50a, 50b may also be monochromatic (for example, green), whereas the virtual reality images 12a, 12b may be polychromatic. On the other hand, in an alternative possible embodiment, the augmented reality images 50a, 50b may instead be polychromatic and/or three-dimensional, just like the virtual reality images 12a, 12b. This is achievable by providing the apparatus 1 with a more sophisticated variety of augmented reality device 30, but this also results in increased cost, weight and image processing.

Purely by way of example, the virtual reality images 12a, 12b may comprise elements of a virtual world, and the augmented reality images 50a, 50b may comprise a user interface (Ul) for controlling the content of the virtual reality images 12a, 12b. For example, as shown in Fig. 3, the user interface may comprise skip backwards, pause, play and skip forwards buttons, which a viewer may operate by directing their gaze at one of the buttons and blinking. This may be detected by the apparatus by means of gaze tracking. The user interface may be for navigating virtual reality libraries, for navigating within a virtual reality video, for gaming, for communication (such as for making and receiving phone calls, sending and receiving text messages, notifications and so on). The UI may also relate to use of the apparatus itself, such as to human factors associated therewith, like prolonged viewing, motion sickness and eye accommodation, or to gaze tracking calibration. The augmented reality images 50a, 50b may also provide such things as advertisements and webpage links related to the content of the virtual reality images 12a, 12b.

Fig. 4 shows a side view of a second apparatus 2, which is a modification of the apparatus 1 shown in Figs. 1A, 1B and 2. The apparatus 2 is in most respects the same as the apparatus 1, except that whereas in the apparatus 1, the augmented reality device 30 is substantially parallel to the display screen 10, so that it intersects the optical axes of each of the projective optical elements 20a, 20b more or less orthogonally, the augmented reality device 30 in the apparatus 2 is oriented at an oblique angle, θ, to the optical axes of the projective optical elements 20a, 20b, in the manner shown in Fig. 4. This results in the augmented reality images 50a, 50b not appearing to the viewer centrally in the scene synthesized by the viewer from the virtual reality images 12a, 12b, but instead at the bottom of the scene, in the manner shown in Fig. 3.

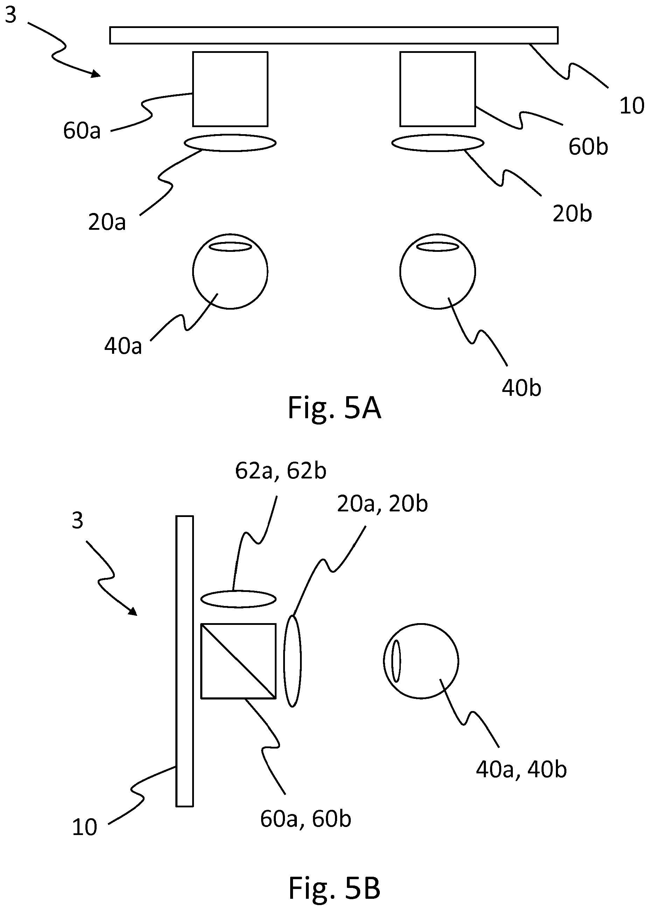

Figs. 5A and 5B schematically show a third apparatus 3. The apparatus 3 comprises a display screen 10, a binocular pair of projective optical elements 20a, 20b, and a pair of beam splitters 60a, 60b, instead of the augmented reality device 30 in the apparatuses 1 and 2. The beam splitters 60a, 60b are interposed between the display screen 10 and the projective optical elements 20a, 20b. In use, therefore, the virtual reality images 12a, 12b from display screen 10 pass through the beam splitters 60a, 60b to the projective optical elements 20a, 20b. Meanwhile, the augmented reality images 50a, 50b are injected into the beam splitters 60a, 60b by respective optical elements 62a, 62b, which are offset from the optical axes of the projective optical elements 20a, 20b. The optical axes of the optical elements 62a, 62b are instead perpendicular to the optical axes of the projective optical element 20a, 20b. The augmented reality images 50a, 50b are then reflected by the beam splitters 60a, 60b towards the projective optical elements 20a, 20b. Thus the augmented reality images 50a, 50b are combined with and superposed on the virtual reality images 12a, 12b in the beam splitters 60a, 60b. In all other respects, however, the apparatus 3 is structured and functions in a similar manner to the apparatuses 1 and 2.

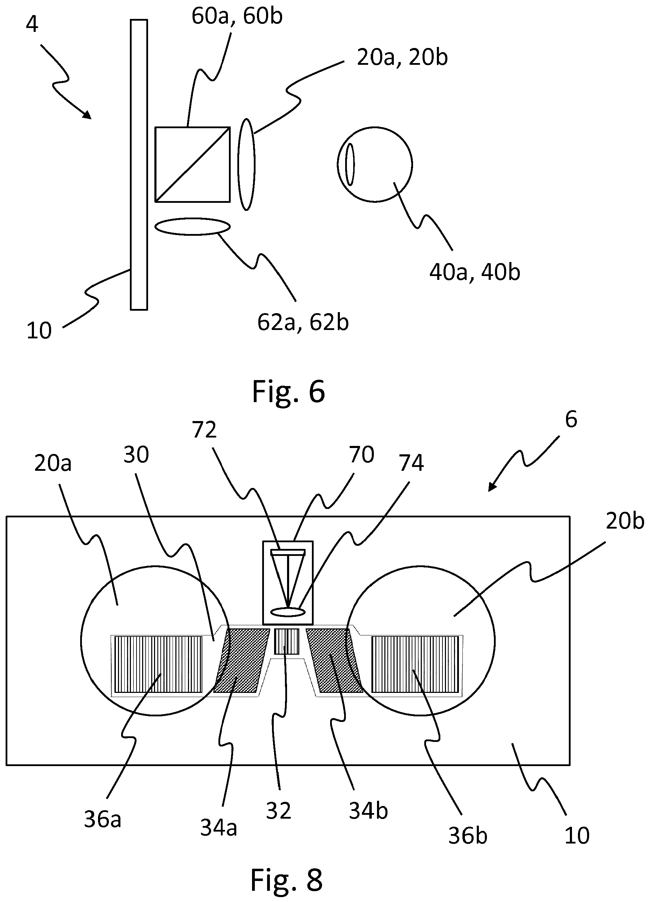

Fig. 6 shows a side view of a fourth apparatus 4, which is a modification of the apparatus 3 shown in Figs. 5A and 5B. The apparatus 4 is in most respects the same as the apparatus 3, except that the orientation of the beam splitters 60a, 60b is inverted in comparison to their orientation in the apparatus 3, and whereas in the apparatus 3, the offset optical elements 62a, 62b are located above the beam splitters 60a, 60b, in the apparatus 4, the offset optical elements 62a, 62b are instead located below the beam splitters 60a, 60b. Thus in use of the apparatus 4, the augmented reality images 50a, 50b may be injected into the beam splitters 60a, 60b from below, rather than from above them.

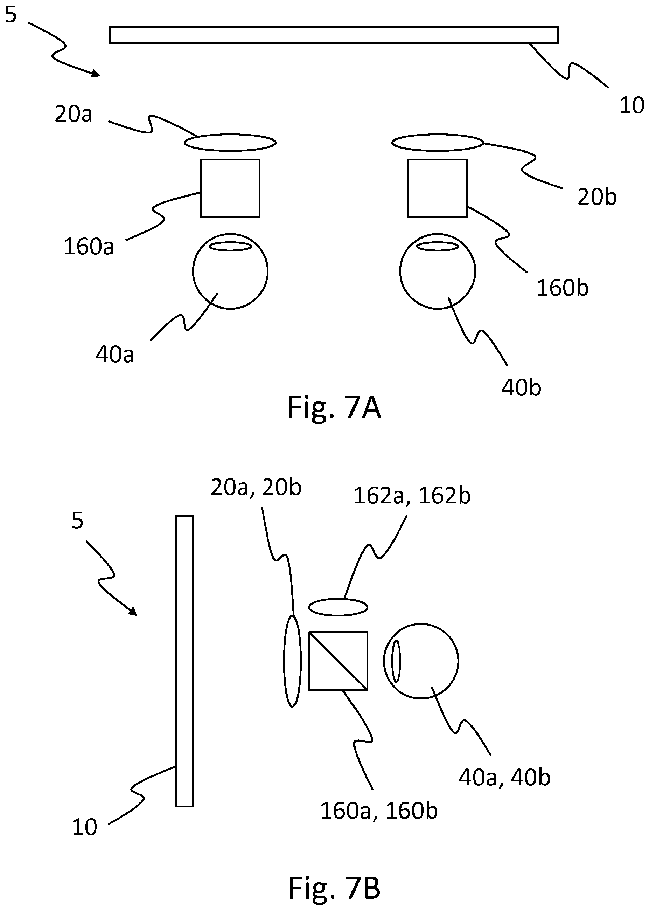

Figs. 7A and 7B schematically show a fifth apparatus 5. The apparatus 5 again comprises a display screen 10, a binocular pair of projective optical elements 20a, 20b, and a pair of beam splitters 160a, 160b. In this case, however, in contrast to the beam splitters 60a, 60b of the apparatus 3 shown in Figs. 5A and 5B, the beam splitters 160a, 160b are located in front of the projective optical elements 20a, 20b. In other words, the projective optical elements 20a, 20b are interposed between the display screen 10 and the beam splitter 160a, 160b. The apparatus 5 further comprises offset optical elements 162a, 162b to inject the augmented reality images 50a, 50b into the beam splitters 160a, 160b, where they are combined with the virtual reality images 12a, 12b from the display screen 10 in a similar manner to that described above in relation to Figs. 5A and 5B. The apparatus 5 may also be modified to locate the offset optical elements 162a, 162b below rather than above the beam splitters 160a, 160b by inverting the orientation of the beam splitters 160a, 160b in a similar manner to that which was described above in relation to Fig. 6.

Fig. 8 schematic shows a near-eye display 6. The near-eye display 6 comprises an apparatus 1 similar to that shown in Figs. 1A, 1B and 2 and described above. The near-eye display 6 also comprises an optical projection engine 70. The optical projection engine 70 comprises a microdisplay 72 and collimator 74 which are configured to inject an augmented reality image into the in-coupling optical element 32 of the augmented reality device 30. In use, the augmented reality image is then split by the in-coupling optical element 32 and transmitted via the intermediate optical elements 34a, 34b to respective ones of the out-coupling optical elements 36a, 36b.

In an alternative possible embodiment to that shown in Fig. 8, the near-eye display 6 may instead comprise beam splitters and offset optical elements as described above in relation to Figs. 5A to 7B, instead of the augmented reality device 30. This, however, would require additional optics, in order to route an augmented reality image from the optical projection engine 70 to the pair of offset optical elements, or would require two optical projection engines, one for each of the binocular pairs of beam splitters and offset optical elements.

Regardless of whether the near-eye display comprises an augmented reality device 30 or beam splitters and offset optical elements, the near-eye display may be adjustable to suit the different interpupillary distances of different viewers. If so, the configuration of the augmented reality device 30 or of the beam splitters and offset optical elements may also be adjustable in concert with the adjustment of the separation between the pair of projective optical elements 20a, 20b to suit the different interpupillary distances of different viewers. Alternatively, however, the augmented reality device 30 or beam splitters and offset optical elements may instead remain fixed, and only the separation between the pair of projective optical elements 20a, 20b may be adjustable. In such a case, the positions of the virtual reality images 12a, 12b would be variable, whereas the positions of the augmented reality images 50a, 50b would remain fixed.

On the other hand, whereas all of the examples described above in relation to Figs. 1A to 7B concern binocular apparatuses and whereas Fig. 8 shows a binocular near-eye display 6, the present invention is equally applicable to monocular apparatuses and near-eye displays. In such a case, a monocular near-eye display comprising only a single beam splitter and a single offset optical element would also only require a single optical projection engine 70. Thus the use of a single optical projection engine 70 with a single beam splitter and a single offset optical element may be more appropriate to a monocular near-eye display than an augmented reality device 30 of the type described above in relation to Figs. 1A to 4 would be.

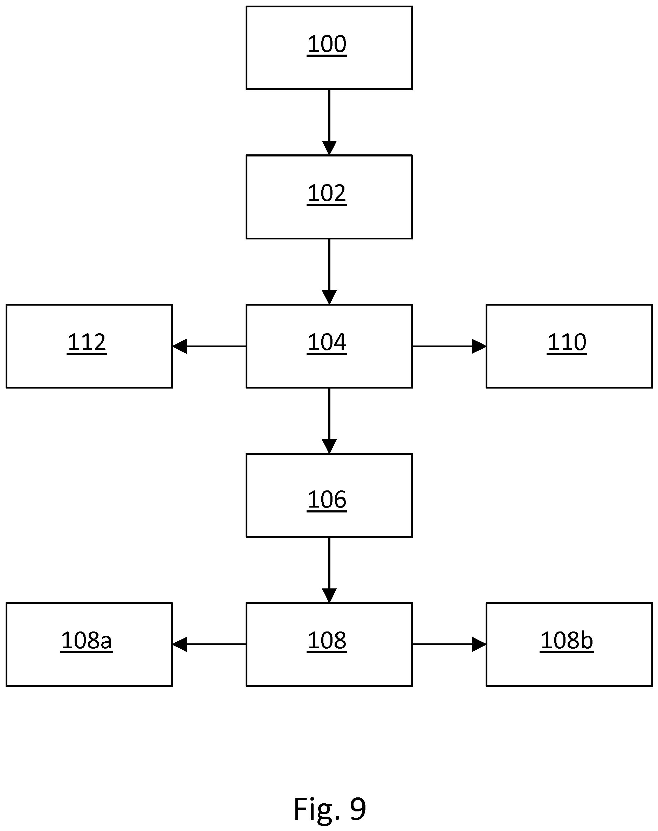

Finally, Fig. 9 schematically represents a method of operating any of the display apparatuses described above in relation to Figs. 1A to 7B. At box 100, a first image is displayed on the display screen. At box 102, the first image is projected through a transparent optical element into an eye of a viewer, thereby becoming a virtual reality image. At box 104, a second image emitted from the transparent optical element is superposed on top of the first image, whereby the second image becomes an augmented reality image. In box 106, the gaze of the viewer is tracked, and in box 108, a visual relationship between the first, virtual reality, image and the second, augmented reality, image is altered according to the gaze of the viewer. For example, the tracking of the viewer's gaze may determine that the viewer has changed focus. In such a case, one of the first and second images may be dimmed or brightened relative to the other of the first and second images, as respectively represented in Fig. 9 by boxes 108a and 108b. For example, if the viewer has changed focus away from the virtual reality image, in order to focus on the augmented reality image, either the virtual reality image could be dimmed or the augmented reality image could be brightened. When the tracking of the viewer's gaze determines that the viewer has changed their focus back to the virtual reality image again, either the virtual reality image could be brightened again back to its original level of brightness or the augmented reality image could be dimmed once again.

As represented by box 110 in Fig. 9, the method may also comprise reproducing at least a part of the first, virtual reality image in the second, augmented reality image at a higher resolution than the first image. Thus, for example, whereas the first, virtual reality image may have a resolution of, for example, about 10 to 15 pixels per degree, the second, augmented reality image may have a resolution of, for example, about 40 pixels per degree or more. This has the effect of creating an artificial analogue to the macula of a human retina, allowing the viewer to see increased detail in the central region of the combined images, for example. This requires less image-processing power than if the entirety of the first, virtual reality image were to be reproduced at the same increased resolution. However, the lesser resolution at the peripheries of first, virtual reality image are such as to be either barely noticeable or completely unnoticeable by a human viewer because the viewer's gaze generally remains directed only to the central region. If the area of increased resolution is to be provided in the centre of the first, virtual reality image, this requires each transparent optical element in the apparatus to be oriented such that it intersects the optical axis of its corresponding projective optical element more or less orthogonally, in the manner shown in Figs. 1A, 1B and 5A to 7B, and not at an oblique angle thereto, as is shown in Fig. 4.

If the second, augmented reality image reproduces at least a part of the first, virtual reality image and if the first and second images lie in different focal planes from each other, this may also be used to increase the viewer's perception of depth in the first, virtual reality image, as well as its resolution.

As represented by box 112 in Fig. 9, the method may also comprise varying the transparency of the second image. Thus, for example, at least a part of the first, virtual reality image may be masked by making the second, augmented reality image more or less opaque. Alternatively or additionally, the second, augmented reality image can be adjusted to different levels of transparency for different user interface applications, for example.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one' or by using 'consisting'.

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection, as defined in the claims, in respect of any patentable feature or combination of features hereinbefore referred to and/or shown in the drawings whether or not particular emphasis has been placed thereon.

## Claims

1. An apparatus (1, 2, 3, 4, 5) comprising:
a display screen (10);
a projective optical element (20a, 20b) in front of the display screen (10) and configured to project a first image displayed on the display screen into an eye (40a, 40b) of a viewer, wherein the first image is a virtual reality image; and
a transparent optical element (36a, 36b; 60a, 60b; 160a, 160b) positioned in an optical pathway from the display screen (10) to the eye (40a, 40b) of the viewer and configured to superpose a second image on top of the first image, wherein the second image is an augmented reality image comprising a user interface for controlling the content of the first image.

2. An apparatus (1, 2, 3, 4, 5) according to claim 1, wherein:
the projective optical element (20a, 20b) is configured to bring the first image into focus in a first focal plane and the transparent optical element (36a, 36b; 60a, 60b; 160a, 160b) is configured to bring the second image into focus in a second focal plane which is different from the first focal plane.

3. An apparatus (1, 2) according to claim 1 or claim 2, wherein the transparent optical element comprises an out-coupling optical element (36a, 36b) of an exit pupil expander (30) and the projective optical element (20a, 20b) is interposed between the display screen (10) and the exit pupil expander (30).

4. An apparatus (1, 2) according to claim 3, wherein a surface of the out-coupling optical element (36a, 36b) facing away from the projective optical element (20a, 20b) is convexly curved.

5. An apparatus (2) according to claim 3 or claim 4, wherein the out-coupling optical element (36a, 36b) is oriented at an oblique angle (θ) to the optical axis of the projective optical element (20a, 20b).

6. An apparatus (3, 4, 5) according to claim 1 or claim 2, wherein the transparent optical element comprises a beam splitter (60a, 60b; 160a, 160b) and an offset optical element (62a, 62b; 162a, 162b), the optical axis of which is aligned with the beam splitter perpendicular to the optical axis of the projective optical element (20a, 20b).

7. An apparatus (3, 4) according to claim 6, wherein the beam splitter (60a, 60b) is interposed between the display screen (10) and the projective optical element (20a, 20b).

8. An apparatus (5) according to claim 6, wherein the projective optical element (20a, 20b) is interposed between the display screen (10) and the beam splitter (160a, 160b).

9. A near-eye display (6) comprising:
an apparatus (1, 2, 3, 4, 5) according to any one of claims 1 to 8, wherein the apparatus comprises a binocular pair of the projective optical elements (20a, 20b) and a binocular pair of the transparent optical elements (36a, 36b; 60a, 60b; 160a, 160b), each one of which is positioned in an optical pathway from the display screen (10) to one of the eyes (40a, 40b) of the viewer; and
an optical projection engine (70) configured to project the second image into the pair of transparent optical elements (36a, 36b; 60a, 60b; 160a, 160b).

10. A near-eye display (6) according to claim 9, wherein the convergence angles of the pair of transparent optical elements (36a, 36b; 60a, 60b; 160a, 160b) mirror each other and the focal planes of the second image provided by each one of the pair of transparent optical elements are substantially the same as each other.

11. A method comprising:
displaying (100) a first image on a display screen (10), wherein the first image is a virtual reality image;
projecting (102) the first image through a transparent optical element (36a, 36b; 60a, 60b; 160a, 160b) into an eye (40a, 40b) of a viewer; and
superposing (104) a second image emitted from the transparent optical element on top of the first image, wherein the second image is an augmented reality image comprising a user interface for controlling the content of the first image.

12. A method according to claim 11, comprising:
tracking (106) a gaze of the viewer;
altering (108) a visual relationship between the first image and the second image according to the gaze of the viewer.

13. A method according to claim 12, wherein altering (108) the visual relationship between the first image and the second image comprises dimming (108a) or brightening (108b) one of the first and second images relative to the other of the first and second images.

14. A method according to any one of claims 11 to 13, comprising reproducing (110) at least a part of the first image in the second image at a higher resolution than the first image.

15. A method according to any one of claims 11 to 14, comprising varying (112) the transparency of the second image.

## Patentansprüche

1. Vorrichtung (1, 2, 3, 4, 5) umfassend:
einen Bildschirm (10);
ein projektives optisches Element (20a, 20b) vor dem Bildschirm (10), und das dafür konfiguriert ist, ein auf dem Bildschirm angezeigtes erstes Bild in ein Auge (40a, 40b) eines Betrachters zu projizieren, wobei das erste Bild ein Bild der virtuellen Realität ist; und
ein transparentes optisches Element (36a, 36b; 60a, 60b; 160a, 160b), das in einem optischen Pfad von dem Bildschirm (10) zu dem Auge (40a, 40b) des Betrachters positioniert und dafür konfiguriert ist, ein zweites Bild über das erste Bild zu legen, wobei das zweite Bild ein Bild der erweiterten Realität ist, das eine Benutzerschnittstelle zur Steuerung des Inhalts des ersten Bildes umfasst.

2. Vorrichtung (1, 2, 3, 4, 5) nach Anspruch 1, wobei:
das projektive optische Element (20a, 20b) dafür konfiguriert ist, das erste Bild in einer ersten Brennebene in den Fokus zu bringen, und das transparente optische Element (36a, 36b; 60a, 60b; 160a, 160b) dafür konfiguriert ist, das zweite Bild in einer zweiten Brennebene, die sich von der ersten Brennebene unterscheidet, in den Fokus zu bringen.

3. Vorrichtung (1, 2) nach Anspruch 1 oder Anspruch 2, wobei das transparente optische Element ein auskoppelndes optisches Element (36a, 36b) eines Austrittspupillenerweiterers (30) umfasst und das projektive optische Element (20a, 20b) zwischen dem Bildschirm (10) und dem Austrittspupillenerweiterer (30) angeordnet ist.

4. Vorrichtung (1, 2) nach Anspruch 3, wobei eine Oberfläche des auskoppelnden optischen Elements (36a, 36b), die von dem projektiven optischen Element (20a, 20b) abgewandt ist, konvex gekrümmt ist.

5. Vorrichtung (2) nach Anspruch 3 oder Anspruch 4, wobei das auskoppelnde optische Element (36a, 36b) in einem schrägen Winkel (θ) zu der optischen Achse des projektiven optischen Elements (20a, 20b) ausgerichtet ist.

6. Vorrichtung (3, 4, 5) nach Anspruch 1 oder Anspruch 2, wobei das transparente optische Element einen Strahlteiler (60a, 60b; 160a, 160b) und ein versetztes optisches Element (62a, 62b; 162a, 162b) umfasst, dessen optische Achse mit dem Strahlteiler senkrecht zu der optischen Achse des projektiven optischen Elements (20a, 20b) ausgerichtet ist.

7. Vorrichtung (3, 4) nach Anspruch 6, wobei der Strahlteiler (60a, 60b) zwischen dem Bildschirm (10) und dem projektiven optischen Element (20a, 20b) angeordnet ist.

8. Vorrichtung (5) nach Anspruch 6, wobei das projektive optische Element (20a, 20b) zwischen dem Bildschirm (10) und dem Strahlteiler (160a, 160b) angeordnet ist.

9. Augennahe Anzeige (6) umfassend:
eine Vorrichtung (1, 2, 3, 4, 5) nach einem der Ansprüche 1 bis 8, wobei die Vorrichtung ein binokulares Paar der projektiven optischen Elemente (20a, 20b) und ein binokulares Paar der transparenten optischen Elemente (36a, 36b; 60a, 60b; 160a, 160b) umfasst, von denen jedes in einem optischen Pfad von dem Bildschirm (10) zu einem der Augen (40a, 40b) des Betrachters positioniert ist; und
eine optische Projektionseinheit (70), die dafür konfiguriert ist, das zweite Bild in das Paar transparenter optischer Elemente (36a, 36b; 60a, 60b; 160a, 160b) zu projizieren.

10. Augennahe Anzeige (6) nach Anspruch 9, wobei die Konvergenzwinkel des Paares transparenter optischer Elemente (36a, 36b; 60a, 60b; 160a, 160b) einander spiegeln und die Brennebenen des zweiten Bildes, das von jedem des Paares transparenter optischer Elemente bereitgestellt wird, im Wesentlichen gleich sind.

11. Verfahren umfassend:
Anzeigen (100) eines ersten Bildes auf einem Bildschirm (10), wobei das erste Bild ein Bild der virtuellen Realität ist;
Projizieren (102) des ersten Bildes durch ein transparentes optisches Element (36a, 36b; 60a, 60b; 160a, 160b) in ein Auge (40a, 40b) eines Betrachters; und
Überlagern (104) eines zweiten Bildes, das von dem transparenten optischen Element emittiert wird, auf das erste Bild, wobei das zweite Bild ein Bild der erweiterten Realität ist, das eine Benutzerschnittstelle zur Steuerung des Inhalts des ersten Bildes umfasst.

12. Verfahren nach Anspruch 11, umfassend:
Verfolgen (106) eines Blicks des Betrachters;
Ändern (108) einer visuellen Beziehung zwischen dem ersten Bild und dem zweiten Bild in Abhängigkeit von dem Blick des Betrachters.

13. Verfahren nach Anspruch 12, wobei das Ändern (108) der visuellen Beziehung zwischen dem ersten Bild und dem zweiten Bild das Abdunkeln (108a) oder Aufhellen (108b) entweder des ersten oder des zweiten Bildes in Bezug auf das andere des ersten und des zweiten Bildes umfasst.

14. Verfahren nach einem der Ansprüche 11 bis 13, umfassend das Wiedergeben (110) mindestens eines Teils des ersten Bildes in dem zweiten Bild mit einer höheren Auflösung als das erste Bild.

15. Verfahren nach einem der Ansprüche 11 bis 14, umfassend das Variieren (112) der Transparenz des zweiten Bildes.

## Revendications

1. Appareil (1, 2, 3, 4, 5) comprenant :
un écran d'affichage (10) ;
un élément optique de projection (20a, 20b) devant l'écran d'affichage (10) configuré pour projeter une première image affichée sur l'écran d'affichage dans un œil (40a, 40b) d'un observateur, dans lequel la première image est une image de réalité virtuelle ; et
un élément optique transparent (36a, 36b ; 60a, 60b ; 160a, 160b) positionné dans un chemin optique allant de l'écran d'affichage (10) à l'œil (40a, 40b) de l'observateur et configuré pour superposer une deuxième image sur le haut de la première image, dans lequel la deuxième image est une image de réalité augmentée comprenant une interface utilisateur pour commander le contenu de la première image.

2. Appareil (1, 2, 3, 4, 5) selon la revendication 1, dans lequel :
l'élément optique de projection (20a, 20b) est configuré pour mettre au point la première image dans un premier plan focal, et l'élément optique transparent (36a, 36b ; 60a, 60b ; 160a, 160b) est configuré pour mettre au point la deuxième image dans un deuxième plan focal qui est différent du premier plan focal.

3. Appareil (1, 2) selon la revendication 1 ou 2, dans lequel l'élément optique transparent comprend un élément optique de couplage de sortie (36a, 36b) d'un extenseur de pupille de sortie (30), et l'élément optique de projection (20a, 20b) est interposé entre l'écran d'affichage (10) et l'extenseur de pupille de sortie (30).

4. Appareil (1, 2) selon la revendication 3, dans lequel une surface de l'élément optique de couplage de sortie (36a, 36b) orientée à l'opposé de l'élément optique de projection (20a, 20b) est à courbure convexe.

5. Appareil (2) selon la revendication 3 ou 4, dans lequel l'élément optique de couplage de sortie (36a, 36b) est orienté à un angle (θ) oblique par rapport à l'axe optique de l'élément optique de projection (20a, 20b).

6. Appareil (3, 4, 5) selon la revendication 1 ou 2, dans lequel l'élément optique transparent comprend un séparateur de faisceau (60a, 60b ; 160a, 160b) et un élément optique décalé (62a, 62b ; 162a, 162b) dont l'axe optique est aligné avec le séparateur de faisceau perpendiculaire à l'axe optique de l'élément optique de projection (20a, 20b).

7. Appareil (3, 4) selon la revendication 6, dans lequel le séparateur de faisceau (60a, 60b) est interposé entre l'écran d'affichage (10) et l'élément optique de projection (20a, 20b).

8. Appareil (5) selon la revendication 6, dans lequel l'élément optique de projection (20a, 20b) est interposé entre l'écran d'affichage (10) et le séparateur de faisceau (160a, 160b) .

9. Affichage proche de l'œil (6) comprenant :
un appareil (1, 2, 3, 4, 5) selon l'une quelconque des revendications 1 à 8, dans lequel l'appareil comprend une paire binoculaire d'éléments optiques de projection (20a, 20b) et une paire binoculaire d'éléments optiques transparents (36a, 36b ; 60a, 60b ; 160a, 160b), chacun d'entre eux étant positionné dans un chemin optique allant de l'écran d'affichage (10) à l'un des yeux (40a, 40b) de l'observateur ; et
un moteur de projection optique (70) configuré pour projeter la deuxième image dans la paire d'éléments optiques transparents (36a, 36b ; 60a, 60b ; 160a, 160b).

10. Affichage proche de l'œil (6) selon la revendication 9, dans lequel les angles de convergence de la paire d'éléments optiques transparents (36a, 36b ; 60a, 60b ; 160a, 160b) se reflètent mutuellement, et les plans focaux de la deuxième image fournie par chacun de la paire d'éléments optiques transparents sont sensiblement les mêmes l'un par rapport à l'autre.

11. Procédé comprenant :
l'affichage (100) d'une première image sur un écran d'affichage (10), dans lequel la première image est une image de réalité virtuelle ;
la projection (102) de la première image à travers un élément optique transparent (36a, 36b ; 60a, 60b ; 160a, 160b) dans un œil (40a, 40b) d'un observateur ; et
la superposition (104) d'une deuxième image émise par l'élément optique transparent sur le haut de la première image, dans lequel la deuxième image est une image de réalité augmentée comprenant une interface utilisateur pour commander le contenu de la première image.

12. Procédé selon la revendication 11, comprenant :
le suivi (106) du regard de l'observateur ;
la modification (108) d'une relation visuelle entre la première image et la deuxième image selon le regard de l'observateur.

13. Procédé selon la revendication 12, dans lequel la modification (108) de la relation visuelle entre la première image et la deuxième image comprend l'atténuation (108a) ou l'éclaircissement (108b) de l'une des première et deuxième images par rapport à l'autre des première et deuxième images.

14. Procédé selon l'une quelconque des revendications 11 à 13, comprenant la reproduction (110) d'au moins une partie de la première image dans la deuxième image à une résolution supérieure à celle de la première image.

15. Procédé selon l'une quelconque des revendications 11 à 14, comprenant la variation (112) de la transparence de la deuxième image.
